# EUROPEAN PATENT SPECIFICATION

(11) **EP 3 246 255 B1**
(45) Date of publication and mention of the grant of the patent: **24.10.2018**
(21) Application number: 16380024.6
(22) Date of filing: 17.05.2016
(51) Int. Cl.: B64F 1/305, G06K 9/00, G06T 7/00

(54) **METHOD FOR POSITIONING A PASSENGER BOARDING BRIDGE AT AN AIRPLANE**
VERFAHREN ZUR POSITIONIERUNG EINER FLUGGASTBRÜCKE AN EINEM FLUGZEUG
PROCÉDÉ DE POSITIONNEMENT D'UNE PASSERELLE D'EMBARQUEMENT DE PASSAGERS À UN AVION

(43) Date of publication of application: 22.11.2017
(73) Proprietor: Thyssenkrupp Elevator Innovation Center, S.A., 33203 Gijon - Asturias (ES); thyssenkrupp AG, 45143 Essen (DE)
(72) Inventor: Perez Perez, Marcos, 33012 Oviedo (ES); Juliana, José Mendiolagoitia, 33203 Gijón (ES); Fernandez, Joaquin Blanco, 33201 Gijón (ES); Alvarez Garcia, Ignacio, 33208 Gijón (ES)
(74) Representative: thyssenkrupp Intellectual Property GmbH

(56) References cited:
- FR-A1- 2 573 724
- US-A- 5 226 204
- US-A1- 2006 288 503

## Description

### Technical field

The invention refers to a method for positioning, in particular docking, a passenger boarding bridge at an airplane.

### Technical background

Nowadays the docking of a passenger boarding bridge is in main performed by a person, who controls the drive means of the passenger boarding bridge. It is a demand to automate this procedure. A concept for automated docking a passenger boarding bridge to an aircraft is disclosed in US 2006/0288503 A1.

EP 2 109 065 B1 discloses in this context system for identifying a type of airplane by optical means. Thereby a nose of the plane is detected and respectively a height of the nose above the ground. By comparing the detected nose height with a known nose height, the type of the airplane can be identified. The system thereby uses a database, in which data of the different types of airplanes are stored.

### Summary of the invention

The object of the invention is to provide a universal method for automatically positioning the passenger boarding bridge at an airplane, without the need to retrieve detailed airplane information from a database and in particular without the mediation of a driver.

This object is solved by the method according to claim 1; preferred embodiments are disclosed in the subclaims and the description.

According to the invention a method is claimed for positioning a passenger boarding bridge at an airplane, wherein the passenger boarding bridge comprises a distal end, which is to be aligned with a door of the airplane, the method comprises of the following steps:
- taking a picture of the airplane when the airplane is in its parking position;
- detecting in the picture a row of at least two window rings, which are, in particular equidistantly, arranged along a line;
- searching for a door polygon adjacent to, in particular left or right of, the row of window rings;
- assessing, whether the door polygon, found during step of searching, is to be considered as an extraction of the door to be detected;
- calculating a relative position of the door, to which the extraction of the door belongs, in particular compared to a position of the distal end of the passenger boarding bridge and/or of the camera(s), wherein the step of calculating is based on the position of the extraction of the door within the picture;
- automatically controlling a movement of the passenger boarding bridge based on the calculated relative position in a way, that the distal end of the passenger boarding bridge gets in alignment with the door, to which the detected extraction of the door belongs.

The rings, which can be considered as extracted contours of side windows or a porthole, can have an ellipsoid (including circular) shape or may be shaped as a rectangle having rounded edges.

The surprising result of analyzing multiple types of airplanes was that nearly every commonly used passenger airplane comprises individual geometrical structures on the exterior body, which can be used for locating a door to which a boarding bridge can be docked. Even if these geometrical structures are in detail different for each airplane, these structures are in general present in each individual airplane and comprise some additional regularities, which apply to all common types of passenger airplanes.

It's the same idea as in face recognition; all people in the world have a different face, comprising different combinations of differently shaped noses, eyes, ears, hair, .... But nevertheless, each face has a nose, which is located somewhere within a polygon, spanned by the eyes and the mouth of the person.

So during the detection of the position of the door with following geometrical features, which can be extracted from the picture, may be checked:
There may be a porthole ring within the door polygon, wherein in particular the porthole ring is an extraction of a porthole located in the door. Each door comprises a porthole, so that the flight crew can get into eye contact with the ramp agent. This porthole may usually be smaller than the side windows and may be located at above the level of the centerline of the side windows, so that the flight crew member can look through the porthole while standing.

In a first configuration the door polygon may be arranged adjacent to a cockpit window polygon and/or between a cockpit window polygon and the window rings. The cockpit window polygon may be the extraction of a cockpit window at the front of the airplane. Since the cockpit window at the front is smaller than the aircraft door, the door polygon in the picture may be larger than the cockpit window polygon. The cockpit window may be located at a height comparable to the height of the side windows. Thus in the picture the cockpit window polygon may be cut by an elongation of a centerline through the side window rings, which represent the side windows. This configuration is in particular the case for a front door of the airplane. The first side window / window rings may be the front side windows / window rings.

In a second configuration the door polygon may be arranged between a first row of first window rings and a second row of second window rings. This configuration is particular the case during detecting a middle door, arranged in a middle section of the airplane. The second windows / window rings may be middle side windows / window rings. The first side windows / window rings may be the front side windows / window rings.

Calculating the relative position may be supported by an assessment of the curvature of side lines of the door polygon, in particular of an assessment of a convex shape of the side lines. The side lines of the representation of the door appear more convex, the more the camera is offset from the door in a direction longitudinally of the airplane, caused by the circular cross section of the airplane. This knowledge helps to detect the position relative between the camera taking he picture and the door.

The invention refers further to an arrangement, comprising a passenger boarding bridge, a camera attached at the passenger boarding bridge for taking a picture of an airplane; the passenger boarding bridge comprising a control unit, the control unit is configured to automatically control drive means of the passenger boarding bridge, and the arrangement is configured to perform the method according to the above.

### Brief description of the drawings

The invention is explained in detail with reference to the figures; the figures show:
- fig. 1: a part of a passenger boarding bridge to be attached to an airplane standing in its parking position at an airport;
- Fig. 2: a) a front picture of a front airplane,
b) geometric elements extracted from the front picture;
- Fig. 3: a) a second picture of a second airplane (with livery),
b) geometric elements extracted from the second picture;
- Fig. 4: more extensive geometric elements similar to figure 2b.

### Description of preferred embodiments

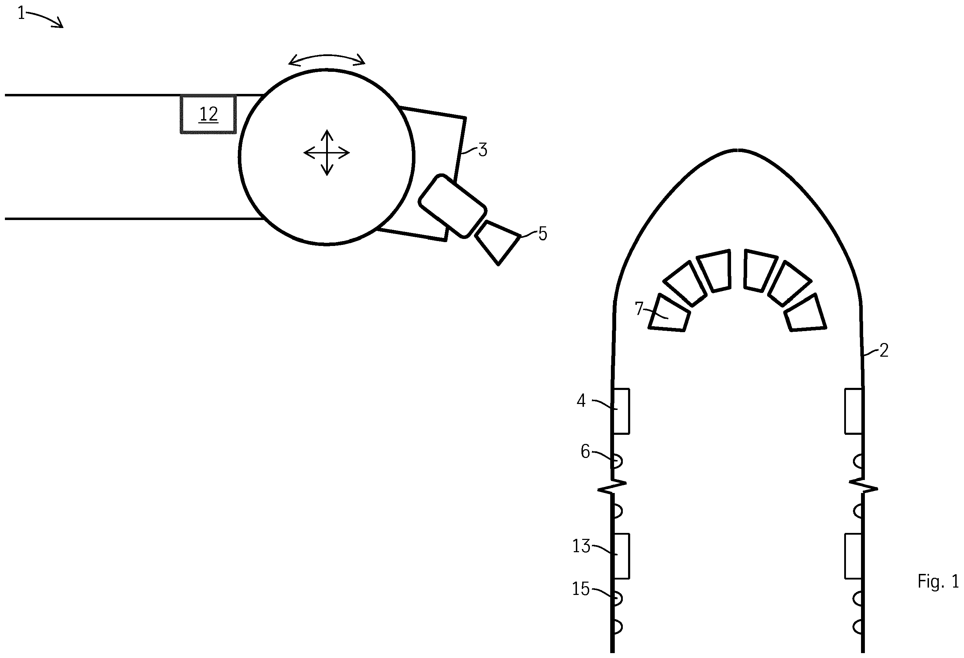

Figure 1 shows a section of a ramp of an airport, in which an airplane 2 is standing in its parking position. A passenger boarding bridge 1, which is connected to a terminal building, has to be docked to the airplane 2. Therefore a distal end 3 of the passenger boarding bridge 1 needs to be aligned with a front door 4 or middle door 13 of the airplane 2. Conventionally the procedure of aligning is performed by an experienced operator, who controls the drive means of the passenger boarding bridge manually. The present invention comprises a control unit 12 adapted to automatically control the drive means of the passenger boarding bridge, so that no operator is needed anymore.

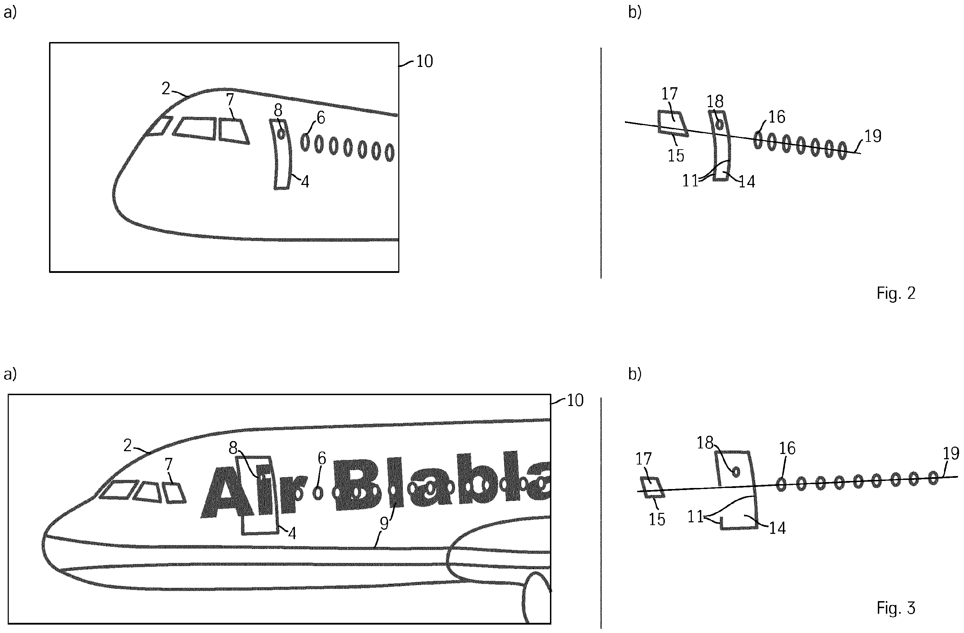

At the passenger boarding bridge at least one camera 5 (or a set of cameras) is provided which takes at least one picture of the airplane 2. Such pictures 10 are shown for two individual airplanes 2 in figures 2a and 3a.

Figure 2a shows a picture 10 taken from a front aircraft by the camera 5. This individual aircraft has a blank surface, which is free from ornamental components (no livery), So the front door 4 and several windows, including cockpit windows 7, front side windows 6 and a porthole 8 within the door, are clearly visible.

Figure 3a shows a picture 10 taken from a second aircraft by the camera 5. This individual second aircraft comprises several ornamental components 9 on its surface (livery), like a broadly written name of the airline and ornamental stripes extending over the entire length of the airplane 2. Parts of the front door 4 and the front side windows 6 are paint over by the ornamental components 9, so that in a front view the front door 4 and the front side windows 6 may not clearly be recognized.

However by using machine vision algorithm for picture analyzing it is possible to extract regular geometric components out of the picture 10, even if they are hidden by the ornamental components 9. As can be seen in figure 2b as well as in figure 3b it is possible to extract from both pictures a row of front side window rings 16 representing the front side windows 6, arranged regularly along a straight centerline 19, a front door polygon 14 representing the front door 4, a further small porthole ring 18 representing the porthole 8, and a cockpit window polygon 17 representing a cockpit window 7.

A suchlike arrangement of geometric standard objects can be retrieved from nearly every usual standard type of one level passenger airplanes; adaptions may be necessary to detect also airplanes having more than one levels, e.g. the Boeing 747 and the Airbus A380. But also here some regular geometric objects may be available.

So since nearly every usual airplane comprises similar geometric objects, the recognition of airplane structures is similar to recognition of human faces by identifying biometric structures. The picture 10 is thus in a technical way to be considered as a "passport photography" of the airplane. In main by using same techniques as detecting an eye or a mouth of a person in a personal photography, rings and polygon structures on the surface of the airplane can be detected in the present picture 10.

However the present invention is capable to detect a door position without a need of retrieving individual data for different types of airplane from a database. Because if the picture recognition algorithm has detected a door in the picture, there is no need to get additional information, because the door position relative to can then already be calculated based on the position of the door within the pictures. The position of the camera 5 relative to the distal end 3 of the passenger boarding bridge 2 is known, so the relative position between the distal end 3 and the front door 4 can be calculated.

So detecting the position of the front door 4 relative to the distal end of the passenger boarding bridge may be performed by analyzing the picture or a plurality of pictures 10; thereby the front door 4 is always arranged left (when boarding is on the left side as usual) or right (when boarding is on the right side, which is quite unusual) of front side window rings 16, which are regularly arranged along a first centerline 19. The front door 4 is further arranged right of a cockpit window polygon 17 representing the cockpit window 7. The center of the cockpit window polygon 17 is arranged slightly above the first centerline 19 through the front side window rings 16.

The cockpit window polygon 17 is always inclined to the front, when viewed from the lowest line, when the camera 5 is positioned slightly in front of the airplane 2, as shown in figure 1.

Furthermore the vertical side lines 11 of the front door polygon 14 representing the front door 4 has a slightly convex shape, which is caused by the circular cross section of the body of the airplane 2.

The convex shape of the side lines 11 appears more distinctive in the picture the more the camera 5 is positioned in front of the airplane 2. This is already apparent from a comparison of figures 2b and 3b. Picture 10 of figure 2a is taken from a more forward position than picture 10 of picture 3a; thus the curvature of the side lines 11 is in figure 2b more distinctive than in figure 3b.

Thus the position of the front door 4 can also be detected by assessing the distinction of the convex shape of the side line 11 in the representation 14 of the front door. By evaluating the differences in the convex shape in a series of pictures, taken subsequently during movement of the distal end and of the camera, the detection of the position of the front door 4 can be supported. When the side lines comprise no convex shape at all, then the picture is taken from an exact side view of the respective front door 4.

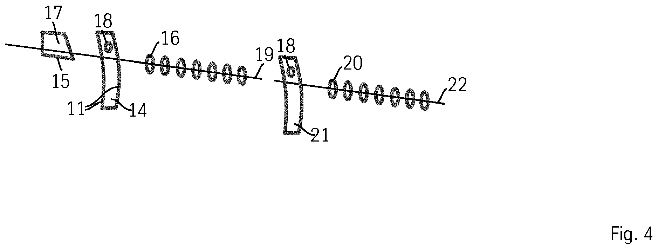

Figures 4 shows a possibility of detecting the position of the middle door 13, which is located at a middle position of the airplane. In addition to figures previously discussed figure 4 shows extractions of the middle door 13 and middle side windows 15 (shown in figure 1). In front of the middle door 13, no cockpit window 7 is arranged. Instead the middle door 13 is arranged between front side windows 6 and middle side windows 15. From a respective picture contours can be retrieved, which are shown in figures 4. Thus the extractions from the picture comprise a middle door polygon 21 arranged between the first row of front side window rings 16 and a row of middle side windows rings 20, representing the middle side windows 13 and arranged along a second centerline 22. The remaining characteristics relevant to detect the position of the middle door 13 are the same as described with reference to the front door 4.

### List of reference signs

- 1: passenger boarding bridge
- 2: airplane
- 3: distal end
- 4: front door
- 5: camera
- 6: front side window
- 7: cockpit window
- 8: porthole
- 9: ornamental components
- 10: picture of airplane
- 11: sidelines
- 12: control unit
- 13: middle door
- 14: extracted contour of front door / front door polygon
- 15: middle side windows
- 16: extracted contour of front side window / front side window ring
- 17: extracted contour of cockpit window / cockpit window polygon
- 18: extracted contour of porthole / porthole ring
- 19: first centerline through contours of front side windows
- 20: extracted contour of middle side window / middle side window ring
- 21: extracted contour of middle door / middle door polygon
- 22: second centerline through contours of middle side windows

## Claims

1. Method for positioning a passenger boarding bridge (1) at an airplane (2), wherein the passenger boarding bridge comprises a distal end (3), which is to be aligned with a door (4, 13) of the airplane (2),
the method comprises the following steps:
- **taking a picture** (10) of the airplane (2) when the airplane is in its parking position;
- **searching** for a door polygon (14, 21) in the picture;
- **assessing,** whether the door polygon (14, 21), found during the step of **searching,** is to be considered as an extraction (14, 21) of a door (4, 13) to be detected;
- **calculating** a relative position of the door (4, 13), to which the extraction (14, 21) of the door (4, 13) belongs, in particular compared to a position of the distal end (3) of the passenger boarding bridge (1) or compared to a camera (5) taking the picture (10), wherein the step of **calculating** is based on the position of the extraction (14, 21) of the door (4, 13) within the picture (10);
- **automatic movement** of the passenger boarding bridge (1) based on the calculated relative position in a way, that the distal end (3) of the passenger boarding bridge (1) gets in alignment with the door (4, 13) of the airplane (2), to which the detected extraction (14, 21) belongs,
**characterized by** the steps of
**detecting** in the picture (10) a row of at least two side window rings (16, 20), which are, in particular equidistantly, arranged along a line (19, 22), wherein in particular the side window ring (16, 20) is an extraction of a side window (6, 15);
**searching** the door polygon (14, 21) adjacent to, in particular left or right of, the row of side window rings (16, 20).

2. Method according to the previous claim,
**characterized in**
**that** during the step of **assessing** it is determined, whether a porthole ring (18) is arranged within the door polygon (14, 21), wherein in particular the porthole ring (18) is an extraction (18) of a porthole (8) located in the door (4, 13).

3. Method according to the previous claim,
**characterized by**
during the step of **assessing** it is determined, whether the porthole ring (18) is smaller than at least one of the side window rings (16, 20), in particular all of the side window rings (16, 20).

4. Method according to claim 2 or 3,
**characterized in**
**that** during the step of **assessing** it is determined, whether the porthole ring (18) is arranged at a higher level than the window rings (16, 20), in particular all of window rings (16, 20),
wherein in particular the porthole ring (18) is arranged at a higher level if the center of the porthole ring (18) is located above a centerline (19, 22) through the centers of the window rings (16, 20).

5. Method according to any of the previous claims,
**characterized in**
**that** during the step of **assessing** it is determined, whether a door polygon (14) is arranged adjacent of a cockpit window polygon (17) and/or between a cockpit window polygon (17) and first side window rings (16),
wherein in particular the cockpit window polygon (17) is an extraction of a cockpit window (7).

6. Method according to the previous claim,
**characterized in**
**that** during the step of **assessing** it is determined, whether the door polygon (14) is larger than the cockpit window polygon (17).

7. Method according to claim 5 or 6,
**characterized in**
**that** during the step of **assessing** it is determined, whether the cockpit window polygon (17) is cut by an elongation of a centerline (19) through the centers of the first window rings (16).

8. Method according to any of claims 2 to 4,
**characterized in**
**that** during the step of **assessing** it is determined, whether the door polygon (21) is arranged between a first row (19) of first window rings (16) and a second row (22) of second window rings (20).

9. Method according to any of the previous claims,
**characterized in**
**that** the step of **calculating** is supported by an assessment of the curvature of side lines (11) of the door polygon (14, 21), in particular of an assessment of a convex shape of the side lines (11).

10. Arrangement, comprising
a passenger boarding bridge (1),
a camera (5) attached at the passenger boarding bridge (1) for taking a picture of an airplane (2);
the passenger boarding bridge comprising a control unit (12),
the control unit (12) is configured to automatically control drive means of the passenger boarding bridge, and
the arrangement is configured to perform the method according to any of the preceding claims.

## Patentansprüche

1. Verfahren zur Positionierung einer Fluggastbrücke (1) an einem Flugzeug (2), wobei die Fluggastbrücke ein distales Ende (3) aufweist, das an einer Tür (4, 13) des Flugzeugs (2) auszurichten ist,
wobei das Verfahren die folgenden Schritte umfasst:
- Aufnehmen eines Bildes (10) des Flugzeugs (2), wenn sich das Flugzeug in seiner Parkposition befindet;
- Suchen nach einem Türpolygon (14, 21) in dem Bild;
- Beurteilen, ob das Türpolygon (14, 21), das während des Schrittes des Suchens gefunden wird, als ein Ausschnitt (14, 21) einer zu erkennenden Tür (4, 13) anzusehen ist;
- Berechnen einer relativen Position der Tür (4, 13), zu der der Ausschnitt (14, 21) der Tür (4, 13) gehört, insbesondere im Vergleich zu einer Position des distalen Endes (3) der Fluggastbrücke (1) oder im Vergleich zu einer Kamera (5), die das Bild (10) aufnimmt, wobei der Schritt des Berechnens auf der Position des Ausschnitts (14, 21) der Tür (4, 13) innerhalb des Bildes (10) basiert;
- automatisches Bewegen der Fluggastbrücke (1) basierend auf der berechneten relativen Position in einer derartigen Weise, dass das distale Ende (3) der Fluggastbrücke (1) an der Tür (4, 13) des Flugzeugs (2), zu der der erkannte Ausschnitt (14, 21) gehört, ausgerichtet wird,
**gekennzeichnet durch** die Schritte
Erkennen in dem Bild (10) einer Reihe aus mindestens zwei Seitenfensterringen (16, 20), welche, insbesondere äquidistant, entlang einer Linie (19, 22) angeordnet sind, wobei der Seitenfensterring (16, 20) insbesondere ein Ausschnitt eines Seitenfensters (6, 15) ist;
Suchen nach dem Türpolygon (14, 21) neben, insbesondere links oder rechts von, der Reihe aus Seitenfensterringen (16, 20).

2. Verfahren nach dem vorhergehenden Anspruch,
**dadurch gekennzeichnet,**
**dass** während des Schrittes des Beurteilens bestimmt wird, ob ein Bullaugenring (18) innerhalb des Türpolygons (14, 21) angeordnet ist, wobei der Bullaugenring (18) insbesondere ein Ausschnitt (18) eines Bullauges (8) ist, der sich in der Tür (4, 13) befindet.

3. Verfahren nach dem vorgehenden Anspruch,
**dadurch gekennzeichnet,**
**dass** während des Schrittes des Beurteilens bestimmt wird, ob der Bullaugenring (18) kleiner als mindestens einer der Seitenfensterringe (16, 20), insbesondere alle der Seitenfensterringe (16, 20), ist.

4. Verfahren nach Anspruch 2 oder 3,
**dadurch gekennzeichnet,**
**dass** während des Schrittes des Beurteilens bestimmt wird, ob der Bullaugenring (18) auf einer höheren Ebene als die Fensterringe (16, 20), insbesondere alle der Fensterringe (16, 20), angeordnet ist,
wobei der Bullaugenring (18) insbesondere auf einer höheren Ebene angeordnet ist, wenn sich die Mitte des Bullaugenrings (18) oberhalb von einer Mittellinie (19, 22) durch die Mitten der Fensterringe (16, 20) befindet.

5. Verfahren nach einem der vorhergehenden Ansprüche,
**dadurch gekennzeichnet,**
**dass** während des Schrittes des Beurteilens bestimmt wird, ob ein Türpolygon (14) neben einem Cockpitfensterpolygon (17) und/oder zwischen einem Cockpitfensterpolygon (17) und ersten Seitenfensterringen (16) angeordnet ist, wobei das Cockpitfensterpolygon (17) insbesondere ein Ausschnitt eines Cockpitfensters (7) ist.

6. Verfahren nach dem vorhergehenden Anspruch,
**dadurch gekennzeichnet,**
**dass** während des Schrittes des Beurteilens bestimmt wird, ob das Türpolygon (14) größer als das Cockpitfensterpolygon (17) ist.

7. Verfahren nach Anspruch 5 oder 6,
**dadurch gekennzeichnet,**
**dass** während des Schrittes des Beurteilens bestimmt wird, ob das Cockpitfensterpolygon (17) von einer Verlängerung einer Mittellinie (19) durch die Mitten der ersten Fensterringe (16) geschnitten wird.

8. Verfahren nach einem der Ansprüche 2 bis 4,
**dadurch gekennzeichnet,**
**dass** während des Schrittes des Beurteilens bestimmt wird, ob das Türpolygon (21) zwischen einer ersten Reihe (19) aus ersten Fensterringen (16) und einer zweiten Reihe (22) aus zweiten Fensterringen (20) angeordnet ist.

9. Verfahren nach einem der vorhergehenden Ansprüche,
**dadurch gekennzeichnet**,
der Schritt des Berechnens durch eine Beurteilung der Krümmung von Seitenlinien (11) des Türpolygons (14, 21), insbesondere durch eine Beurteilung einer konvexen Form der Seitenlinien (11) unterstützt wird.

10. Anordnung, aufweisend
eine Fluggastbrücke (1),
eine an der Fluggastbrücke (1) angebrachte Kamera (5) zum Aufnehmen eines Bildes eines Flugzeugs (2);
wobei die Fluggastbrücke eine Steuereinheit (12) aufweist,
wobei die Steuereinheit (12) dafür ausgelegt ist, Antriebsmittel der Fluggastbrücke automatisch zu steuern, und
wobei die Anordnung dafür eingerichtet ist, das Verfahren nach einem der vorhergehenden Ansprüche durchzuführen.

## Revendications

1. Procédé de positionnement d'une passerelle d'embarquement (1) de passagers au niveau d'un avion (2), la passerelle d'embarquement de passagers comprenant une extrémité distale (3), laquelle est destinée à s'aligner avec une porte (4, 13) de l'avion (2),
le procédé comprenant les étapes suivantes :
- **prise d'une photo** (10) de l'avion (2) lorsque l'avion occupe sa position de stationnement ;
- **recherche** d'un polygone (14, 21) de porte dans la photo ;
- **évaluation** s'il convient de considérer le polygone (14, 21) de porte, identifié durant l'étape de **recherche,** comme une extraction (14, 21) d'une porte (4, 13) à détecter ;
- **calcul** d'une position relative de la porte (4, 13), à laquelle l'extraction (14, 21) de la porte (4, 13) appartient, plus particulièrement par rapport à une position de l'extrémité distale (3) de la passerelle d'embarquement (1) de passagers ou par rapport à un appareil photo (5) prenant la photo (10), l'étape de **calcul** étant basée sur la position de l'extraction (14, 21) de la porte (4, 13) au sein de la photo (10) ;
- **déplacement automatique** de la passerelle d'embarquement (1) de passagers sur la base de la position relative calculée de manière à assurer la mise en alignement de l'extrémité distale (3) de la passerelle d'embarquement (1) de passagers avec la porte (4, 13) de l'avion (2), à laquelle l'extraction détectée (14, 21) appartient,
**caractérisé par** les étapes suivantes
**détection,** dans la photo (10), d'une rangée d'au moins deux ronds (16, 20) de fenêtre latérale, lesquels sont, plus particulièrement de façon équidistante, agencés suivant une ligne (19, 22), le rond (16, 20) de fenêtre latérale constituant plus particulièrement une extraction d'une fenêtre latérale (6, 15) ;
**recherche** du polygone (14, 21) de porte adjacent à la rangée de ronds (16, 20) de fenêtre latérale, plus particulièrement à gauche ou à droite de celle-ci.

2. Procédé selon la revendication précédente,
**caractérisé en**
**ce qu'**il est déterminé, durant l'étape **d'évaluation,** si un rond (18) de hublot est agencé à l'intérieur du polygone (14, 21) de porte, le rond (18) de hublot constituant plus particulièrement une extraction (18) d'un hublot (8) situé dans la porte (4, 13).

3. Procédé selon la revendication précédente,
**caractérisé en**
**ce qu'**il est déterminé, durant l'étape **d'évaluation,** si le rond (18) de hublot est plus petit qu'au moins un des ronds (16, 20) de fenêtre latérale, plus particulièrement que la totalité des ronds (16, 20) de fenêtre latérale.

4. Procédé selon la revendication 2 ou 3,
**caractérisé en**
**ce qu'**il est déterminé, durant l'étape **d'évaluation,** si le rond (18) de hublot est agencé à un plus haut niveau que celui des ronds (16, 20) de fenêtre, plus particulièrement que celui de la totalité des ronds (16, 20) de fenêtre,
plus particulièrement, le rond (18) de hublot étant agencé à un plus haut niveau si le centre du rond (18) de hublot est situé au-dessus d'une ligne centrale (19, 22) passant par les centres des ronds (16, 20) de fenêtre.

5. Procédé selon l'une quelconque des revendications précédentes,
**caractérisé en**
**ce qu'**il est déterminé, durant l'étape **d'évaluation,** si un polygone (14) de porte est agencé adjacent à un polygone (17) de fenêtre de cockpit et/ou entre un polygone (17) de fenêtre de cockpit et des premiers ronds (16) de fenêtre latérale,
plus particulièrement, le polygone (17) de fenêtre de cockpit constituant une extraction d'une fenêtre de cockpit (7).

6. Procédé selon la revendication précédente,
**caractérisé en**
**ce qu'**il est déterminé, durant l'étape **d'évaluation,** si le polygone (14) de porte est plus grand que le polygone (17) de fenêtre de cockpit.

7. Procédé selon la revendication 5 ou 6,
**caractérisé en**
**ce qu'**il est déterminé, durant l'étape **d'évaluation,** si le polygone (17) de fenêtre de cockpit est coupé par un prolongement d'une ligne centrale (19) passant par les centres des premiers ronds (16) de fenêtre.

8. Procédé selon l'une quelconque des revendications 2 à 4,
**caractérisé en**
**ce qu'**il est déterminé, durant l'étape **d'évaluation,** si le polygone (21) de porte est agencé entre une première rangée (19) de premiers ronds (16) de fenêtre et une deuxième rangée (22) de deuxièmes ronds (20) de fenêtre.

9. Procédé selon l'une quelconque des revendications précédentes,
**caractérisé en**
**ce que** l'étape de **calcul** s'appuie sur une évaluation de la courbure de lignes latérales (11) du polygone (14, 21) de porte, plus particulièrement sur une évaluation d'une forme convexe des lignes latérales (11).

10. Agencement, comprenant:
une passerelle d'embarquement (1) de passagers,
un appareil photo (5) fixé au niveau de la passerelle d'embarquement (1) de passagers pour prendre une photo d'un avion (2);
la passerelle d'embarquement de passagers comprenant une unité de commande (12),
l'unité de commande (12) étant configurée pour commander automatiquement des moyens d'entraînement de la passerelle d'embarquement de passagers, et
l'agencement étant configuré pour mettre en oeuvre le procédé selon l'une quelconque des revendications précédentes.
